# EUROPÄISCHE PATENTANMELDUNG

(11) **EP 2 664 450 A2**
(43) Veröffentlichungstag der Anmeldung: **20.11.2013**
(21) Anmeldenummer: 13155170.7
(22) Anmeldetag: 14.02.2013
(51) Int. Cl.: B30B 15/06

(54) **Presspolster sowie hochtemperaturbeständiger Elastomerfaden**

(30) Priorität: 16.05.2012 DE 202012004859 U
(71) Anmelder: Hueck Rheinische GmbH, 41747 Viersen (DE)
(72) Erfinder: Espe, Dr., Rolf, 44795 Bochum (DE)
(74) Vertreter: Bauer, Dirk

(57) **Zusammenfassung**

Offenbart ist ein Presspolster (4) für den Einsatz in hydraulischen Ein- oder Mehretagenheizpressen, umfassend ein Gewebe, das von Kettfäden und Schussfäden gebildet ist, wobei das Gewebe sowohl hochtemperaturbeständige Elastomerfäden (1) als auch metallische Wärmeleitfäden (5) aufweist.

Um ein Presspolster der eingangs beschriebenen Art so zu gestalten, dass es für den Einsatz in Ein- und Mehretagenheizpressen geeignet ist, die insbesondere mit hohen spezifischen Pressdrücken und kurzen Presszeiten arbeiten, wobei das Presspolster besonders gute Polstereigenschaften aufweisen soll, wird erfindungsgemäß vorgeschlagen, zumindest einen Teil der hochtemperaturbeständigen Elastomerfäden (1) mit einem Seelenfaden (3) auszustatten, der von Filamenten gebildet ist, wobei die Filamente von einem Faserwerkstoff gebildet sind, der einen negativen linearen Wärmeausdehnungskoeffizienten aufweist.

Ferner betrifft die vorliegende Erfindung einen entsprechenden Elastomerfaden (1).

## Beschreibung

### Einleitung

Die vorliegende Erfindung betrifft ein Presspolster für den Einsatz in hydraulischen Ein- oder Mehretagenheizpressen, umfassend ein Gewebe, das von Kettfäden und Schussfäden gebildet ist, wobei das Gewebe sowohl hochtemperaturbeständige Elastomerfäden als auch metallische Wärmeleitfäden aufweist.

Ferner betrifft die vorliegende Erfindung einen hochtemperaturbeständigen Elastomerfaden für ein Presspolstergewebe, der einen Seelenfaden aufweist.

### Stand der Technik

Presspolster der eingangs beschriebenen Art werden zum Beispiel in Kurztaktpressen eingesetzt, bei denen es sich um hydraulische Einetagenpressen mit Thermoölbeheizung und spezifischen Pressdrücken bis maximal 100 kg/cm² handelt. In den Pressenanlagen werden Holzwerkstoffe, wie Spanplatten, Sperrholzplatten, MDF-(Medium Density Fiberboard) und HDF-Platten (High Density Fiberboard) mit kunstharzimprägnierten Dekorpapieren beschichtet. Bei den Kunstharzen handelt es sich in der Regel um Aminoplastharze, Harze auf Basis von Melamin und Formaldehyd oder Harnstoff und Formaldehyd oder Mischungen aus beiden Stoffen oder Phenol- und Formaldehyd-Kondensaten.

Bei den dekorativen Oberflächen haben sich die Melaminharze hervorragend bewährt. Es sind Duroplastharze, die nach der Endkondensation auch durch Temperaturzufuhr nicht mehr erweichen, sondern den festen Zustand beibehalten. Zur Beschichtung werden Dekorpapiere mit diesen Harzen imprägniert und in einem Trockenkanal bis zu einem bestimmten Grad vorkondensiert. In den Pressenanlagen werden die Harze unter Druck und Temperatur zunächst wieder verflüssigt, wobei je nach Kondensationsgrad die Harzviskosität wieder ansteigt, um im Endzustand schließlich eine feste Form anzunehmen. Dieser Prozess ist nicht reversibel. Während der Presszeit müssen die Kunstharzfilme eine geschlossene Oberfläche ausbilden. Jeder Druck- oder Temperaturunterschied führt zu Oberflächenstörungen.

Die Herstellung beispielsweise von Fußbodenplatten ist besonders sensibel, da die eingesetzten HDF-Platten eine sehr hohe Rohdichte von über 1000 kg/m³ aufweisen und keine Eigenpolsterwirkung besitzen. Hier spielt der Einsatz von Presspolstern eine besonders große Rolle. Diese müssen für eine gleichmäßige Druck- und Temperaturverteilung sorgen, da alle Pressenanlagen über vergleichsweise große Dickentoleranzen verfügen. Presspolster mit Elastomerfäden haben sich bisher einigermaßen gut bewährt, zeigen aber beim Dauereinsatz in üblichen Pressenanlagen Schwachstellen.

Während der Beschichtung der Fußbodenplatten sind die Melaminharzfilme zunächst niedrigviskos schmelzbar und fließfähig. Im Zuge der Vernetzung vernetzen sie sodann zu einem unlöslichen, harten, thermisch beständigen Kunststoff. Dieser Vernetzungsvorgang wird als so genannte Polykondensation bezeichnet, wobei Wasser- und Formaldehyddampf entstehen. Da die dampfförmigen Spaltprodukte nicht über die Oberfläche entweichen können, müssen sie in der gewählten Presszeit in die Fußbodenplatten diffundieren. Entstehen dabei ungleichmäßige Pressdrücke in der Pressenanlage, werden die Dampfprodukte ferner über eine Pressfläche betrachtet ungleichmäßig diffundieren und die bekannten Oberflächenstörungen in den Fußbodenplatten hervorrufen. Presspolster, die derartige Dickentoleranzen der jeweiligen Heizpresse nicht auszugleichen vermögen, führen zu einem vorzeitigen Presspolsterwechsel, der zeit- und kostenaufwändig ist.

Aus der Patentliteratur sind verschiedene Presspolster bekannt. Beispielsweise beschreiben die Patentschriften EP 0 735 949 B1 und EP 1 136 248 A1 jeweils Presspolster, bei denen die Kettfäden und/oder die Schussfäden ein Silikonelastomer oder ein Copolymer, bestehend aus Silikonkautschuk und Fluorsilikonkautschuk, aufweisen. Die Kett- und/oder Schussfäden aus den zuvor erwähnten Elastomerfäden weisen als Seelenfaden einen Metallfaden auf.

Aus der Patentschrift EP 1 300 235 A1 ist ein Presspolster bekannt, welches ein kombiniertes Drahtgewebe aus Metall- und Kunststofffäden aufweist. Das Drahtgewebe ist mittels einer Silikonbeschichtung beschichtet.

Alle Presspolster, die einem Gewebe entsprechen und mit Elastomerwerkstoffen ausgerüstet sind, weisen in ihren Schuss- oder Kettfäden zur Stabilisierung einen Seelenfaden in Form eines oder mehrerer verzwirnter oder unverzwirnter Metallfäden auf. Der Seelenfaden dient zur Stabilisierung des Elastomerfadens bei der Extrusion und späterem Webprozess.

Bekannter Weise dient der metallische Seelenfaden in dem Presspolster vornehmlich der Wärmeübertragung. Bezüglich der Polsterwirkung besitzen Metalle keine positiven Eigenschaften, da sie verhältnismäßig steif sind. Auch Elastomerwerkstoffe verlieren in dem eingesetzten Temperaturbereich nach einer bestimmten Zeitdauer ihre Elastizität zu einem gewissen Grad, wodurch ein Abfall in der Rückstellkraft zu beobachten ist.

Sowohl in der DE 201 150 945 U1 als auch in der DE 200 10 601 U1 werden Presspolster beschrieben, wobei zur Verbesserung der Wärmeleitfähigkeit des jeweiligen Presspolsters den Einsatz von Wärmeleitfäden vorschlagen werden, die vorteilhafterweise von Kohlenstoffbeziehungsweise Graphitfäden gebildet werden sollen.

### Aufgabe

Der Erfindung liegt die Aufgabe zugrunde, ein Presspolster der eingangs beschriebenen Art so zu gestalten, dass es für den Einsatz in Ein- und Mehretagenheizpressen geeignet ist, die insbesondere mit hohen spezifischen Pressdrücken und kurzen Presszeiten arbeiten, wobei das Presspolster besonders gute Polstereigenschaften aufweisen soll.

### Lösung

Diese Aufgabe wird erfindungsgemäß dadurch gelöst, dass zumindest ein Teil der hochtemperaturbeständigen Elastomerfäden einen Seelenfaden aufweisen, der von Filamenten gebildet ist, wobei die Filamente von einem Faserwerkstoff gebildet sind, der einen negativen linearen Wärmeausdehnungskoeffizienten aufweist.

Beispielsweise besitzen Kohlenstoff- oder Graphitfasern in Längsrichtung einen negativen Wärmeausdehnungskoeffizienten von -0,1 [10⁻⁶/K]. Das heißt, dass die Fasern, die in Form von Filamenten eingesetzt werden, im Fall eines Temperaturanstiegs kürzer und dicker und im Fall eines Temperaturabfalls länger und dünner werden. Insoweit ist das Materialverhalten der Fasern anisotrop, da sich die Fasern in deren radiale Richtung ("Dickenrichtung") anders verhalten, als in deren Längsrichtung. Das bedeutet, dass ein Presspolster, welches Elastomerfäden mit jeweils einem beispielsweise von Karbon gebildeten Seelenfaden aufweist, in der Heizpresse zu einer Volumenvergrößerung des Presspolsters in Dickenrichtung führt. Die Verkürzung bei gleichzeitiger Verdickung der von dem Faserwerkstoff gebildeten Seelenfäden wirkt sich auf deren elastomere Hülle aus, die den Seelenfaden unter Ausbildung eines Verbundes umhüllen. Somit wird die elastomere Hülle durch die Verkürzung des Seelenfadens gedrückt und durch die radiale Verdickung aufgeweitet. Beides führt zu einer Ausdehnung des jeweiligen Elastomerfadens in Dickenrichtung, so dass ein Durchmesser des Elastomerfadens bei einer höheren Temperatur größer ist als bei einer niedrigeren Temperatur. Durch diese Volumenvergrößerung in Dickenrichtung eines jeden einzelnen Elastomerfadens wird analog eine entsprechende "Verdickung" des gesamten von diesen Elastomerfäden gebildeten Presspolsters erreicht. Durch diese Verdickung des Presspolsters entsteht wiederum ein zusätzlicher Gegendruck auf die an dem Presspolster angrenzenden Bauteile, wobei der Gegendruck die Polsterwirkung des Presspolsters naturgemäß erhöht und somit eine gleichmäßigere Kraftverteilung über die Fläche des Presspolsters ermöglicht.

Der Einsatz einer Kohlenstoff-/Graphitfaser ist überdies deshalb besonders von Vorteil, da sie eine sehr hohe Wärmestabilität besitzt, die sie hervorragend für einen Pressvorgang nutzbar macht. Weitere Vorteile sind die gute Wärmeleitfähigkeit (die Wärmeleitzahl beträgt 17 W/[mK]) und die sehr hohe Zugfestigkeit von 3530 MPa [N/mm²]. Grundsätzlich sind jedoch ebenso andere Werkstoffe für den Einsatz als Seelenfaden denkbar, wobei lediglich eine hohe Wärmetemperaturbeständigkeit entsprechend der Einsatztemperatur in der jeweiligen Heizpresse und ein negativer linearer Wärmeausdehnungskoeffizient zur Lösung der gestellten Aufgabe zwingend sind.

Dabei kann es für das Presspolster vorteilhaft sein, wenn zumindest ein Teil der hochtemperaturbeständigen Elastomerfäden einen Seelenfaden aufweisen, der von Metalllitzen gebildet ist. Die vorstehend beschriebenen positiven Effekte der Elastomerfäden, deren Seelenfaden von einem Faserwerkstoff mit einem negativen Wärmeausdehnungskoeffizient gebildet ist, bleiben dabei unverändert. Allerdings kann es je nach dem konkreten Anwendungsfall des Presspolsters ausreichen, wenn lediglich ein Teil der Elastomerfäden einen derartigen Seelenfaden aufweist. Aus Kostengründen ist es dann besonders von Vorteil, die übrigen Elastomerfäden mit üblichen von Metalllitzen gebildeten Seelenfäden auszustatten. Alternativ ist es ebenso denkbar, zumindest einen Teil der hochtemperaturbeständigen Elastomerfäden mit einem Seelenfaden auszustatten, der von einem temperaturbeständigen Kunststofffaden gebildet ist, wobei der Kunststofffaden einen positiven linearen Wärmeausdehnungskoeffizienten aufweist. Gleichermaßen ist es denkbar, mehr als zwei unterschiedliche Typen von Elastomerfäden zu verwenden, die jeweils durch unterschiedliche Seelenfäden gekennzeichnet sind.

Zur näheren Erläuterung wird bemerkt, dass unter der Kohlenstofffaser verschiedene Begriffe einhergehen. Kohlenstofffasern oder Karbonfasern sind industriell hergestellte Fasern aus kohlenstoffhaltigen Ausgangsmaterialien, die durch Pyrolyse in graphitartig angeordneten Kohlenstoff umgewandelt werden. Es wird in isotrope und anisotrope Typen unterschieden, wobei isotrope Fasern nur vergleichsweise geringe Festigkeiten aufweisen und somit von geringer technischer Bedeutung sind. Anisotrope Fasern weisen hingegen hohe Festigkeiten und Steifigkeiten auf und werden daher technisch hauptsächlich verarbeitet. Bei einer Temperatur während der Herstellung von mehr als 1800 °C nehmen die Fasern eine graphitische Struktur an, weshalb auch häufig von so genannten "Graphitfasern" die Rede ist, obwohl der Begriff streng genommen nicht zutrifft. Der Schichtebenenabstand zwischen den Kohlenstoffschichten bleibt jedoch über dem eigentlichen von Graphit bekannten Wert. Der größte Teil der heute gebräuchlichen Hochleistungsfasern wird durch Stabilisierungsreaktionen an Luft und anschließender Pyrolyse unter Schutzgas aus Polyacrylnitril (PAN) gefertigt.

Nach der Erfindung können in dem Presspolster für die Kett- und/oder Schussfäden Elastomere in Form von Silikonkautschuk, Fluorkautschuk, Fluorsilikonkautschuk oder Coploymere aus Silikon- und Fluorsilikonkautschuk eingesetzt werden. Als Seelenfaden wird bei der Extrusion des jeweiligen Elastomer- oder Copolymerwerkstoffs beispielsweise ein Kohlenstoff- oder Graphitfaserfilament als Träger eingesetzt.

Zur weiteren Ausgestaltung der Erfindung können als Kettfäden oder Schussfäden Wärmeleitfäden, beispielsweise in Form von Metalllitzen oder Kohlenstoff-/Graphitrovings, eingesetzt werden, um die Wärmeleitfähigkeit des Presspolsters zu steigern. Ein solcher Wärmeleitfaden ist vorteilhafterweise von einem Hybridfaden gebildet, der wiederum von
● Polytetrafluorethylen und
● einem Kohlenstoffroving oder einem Graphitroving
gebildet ist.

Ausgehend von einem Elastomerfaden der eingangs beschriebenen Art wird die zugrunde liegende Aufgabe erfindungsgemäß dadurch gelöst, dass der Seelenfaden von Filamenten gebildet ist, wobei die Filamente von einem Faserwerkstoff gebildet sind, der einen negativen linearen Wärmeausdehnungskoeffizienten aufweist. Die Vorteile eines solchen Elastomerfadens sind vorstehend bereits erläutert.

In einer besonders vorteilhaften Ausgestaltung des Elastomerfadens ist dessen Seelenfaden von Kohlenstofffilamenten oder Graphitfaserfilamenten gebildet. Die Vorzüge dieser Materialwahl sind vorstehend bereits erläutert.

### Ausführungsbeispiele

Die vorstehend beschriebene Erfindung wird nachfolgend anhand von Ausführungsbeispielen, die in den Figuren dargestellt sind, näher erläutert.

Es zeigt:
- Fig. 1:: Einen Querschnitt durch einen erfindungsgemäßen Elastomerfaden und
- Fig. 2:: Einen Querschnitt durch eine Schicht eines erfindungsgemäßen Presspolsters.

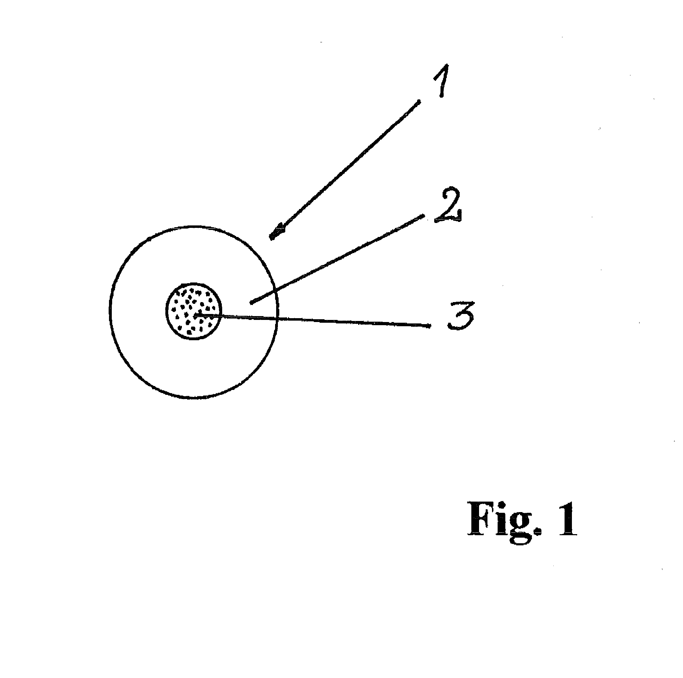

Ein in Figur 1 in dessen Querschnitt dargestellter Elastomerfaden **1** besteht aus einem Silikon-/Fluorsilikonelastomer **2** und einem Seelenfaden **3,** der von einem Faserwerkstoff in Form eines Kohlenstoff-/Graphitfilaments gebildet ist.

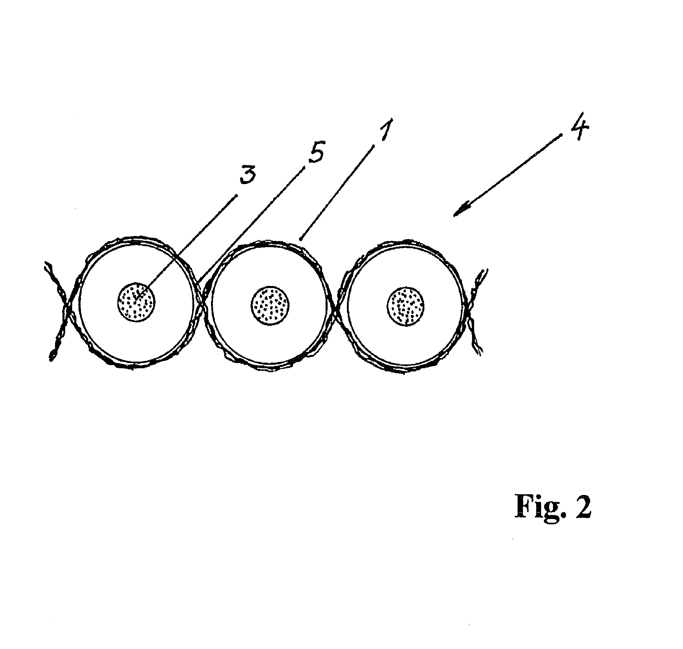

Eine in Figur 2 in deren Querschnitt dargestellte Schicht eines erfinderischen Presspolsters **4** umfasst Elastomerfäden **1** gemäß Figur 1 in Form von Schussfäden sowie metallische Wärmeleitfäden **5** in Form von Kettfäden, wobei die Wärmeleitfäden **5** von verlitzten Messingfäden gebildet sind.

Die Elastomerfäden **1** sind hier von einem Copolymer von Silikon- und Fluorsilikonkautschuk gebildet, wobei der Seelenfaden **3** ein Kohlenstoff-/Graphitfilament mit einem Titer von 400 tex aufweist. Die Schussdichte beträgt 450 Schuss pro 100 cm Weblänge.

Die Wärmeleitfäden **5** bestehen aus verlitzten Messingeinzeldrähten 7 × 0,20 mm der Messingqualität MS 30. Die Kettfadendichte beträgt 800 Kettfäden pro 100 cm Webbreite.

Für die Elastomerfäden **1** sind in der gezeigten Ausführung PAN Karbonfasern als Rovings mit 400 tex eingesetzt. Als "Rovings" bezeichnet man Faserbündel oder Faserstränge von endlosen unverdrehten, gestreckten Einzelfasern (Filamente). Die Rovings werden nach ihrer Filamentanzahl (Tex-Zahl) bezeichnet:
● 1 k entspricht 1000 Filamenten
● 6 k entspricht 6000 Filamenten und
● 24 k entspricht 24000 Filamenten

Der Titer wird in tex angegeben, wobei die tex-Zahl die Einheit g/km hat. Sie hängt von der Dichte des verwendeten Materials ab. Somit weist ein 12 k Kohlenstofffaser-Roving in etwa 800 tex auf. Da die Dichte einer Kohlenstofffaser mit 1,8 g/cm³ relativ konstant ist, lässt sich die Anzahl der verwendeten Filamente leicht zu dem eingesetzten Titer errechnen.

### Bezugszeichenliste

- 1: Elastomerfaden
- 2: Silikon-/Fluorsilikonelastomer
- 3: Seelenfaden
- 4: Presspolster
- 5: Wärmeleitfaden

## Patentansprüche

1. Presspolster (4) für den Einsatz in hydraulischen Ein- oder Mehretagenheizpressen, umfassend ein Gewebe, das von Kettfäden und Schussfäden gebildet ist, wobei das Gewebe sowohl hochtemperaturbeständige Elastomerfäden (1) als auch metallische Wärmeleitfäden (5) aufweist, **dadurch gekennzeichnet, dass** zumindest ein Teil der hochtemperaturbeständigen Elastomerfäden (1) einen Seelenfaden (3) aufweisen, der von Filamenten gebildet ist, wobei die Filamente von einem Faserwerkstoff gebildet sind, der einen negativen linearen Wärmeausdehnungskoeffizienten aufweist.

2. Presspolster (4) nach Anspruch 1, **dadurch gekennzeichnet, dass** zumindest ein Teil der hochtemperaturbeständigen Elastomerfäden (1) einen Seelenfaden (3) aufweisen, der von Metalllitzen gebildet ist.

3. Presspolster (4) nach Anspruch 1 oder 2, **dadurch gekennzeichnet, dass** zumindest ein Teil der hochtemperaturbeständigen Elastomerfäden (1) einen Seelenfaden (3) aufweisen, der von einem temperaturbeständigen Kunststofffaden gebildet ist, wobei der Kunststofffaden einen positiven linearen Wärmeausdehnungskoeffizienten aufweist.

4. Presspolster (4) nach einem der Ansprüche 1 bis 3, **dadurch gekennzeichnet, dass** das Gewebe ferner mindestens einen Wärmeleitfaden (5) aufweist, der als Kettfaden oder als Schussfaden wirkt, wobei der Wärmeleitfaden (5) vorteilhafterweise von einem Kohlenstoffroving oder einem Graphitroving gebildet ist.

5. Presspolster (4) nach einem der Ansprüche 4, **dadurch gekennzeichnet, dass** der mindestens eine Wärmeleitfaden (5) von einem Hybridfaden gebildet ist, der von
- Polytetrafluorethylen und
- einem Kohlenstoffroving oder einem Graphitroving
gebildet ist.

6. Hochtemperaturbeständiger Elastomerfaden (1) für ein Presspolster (4), der einen Seelenfaden (3) aufweist, **dadurch gekennzeichnet, dass** der Seelenfaden (3) von Filamenten gebildet ist, wobei die Filamente von einem Faserwerkstoff gebildet sind, der einen negativen linearen Wärmeausdehnungskoeffizienten aufweist.

7. Elastomerfaden (1) nach Anspruch 6, **dadurch gekennzeichnet, dass** der Seelenfaden (3) von Kohlenstofffilamenten oder Graphitfaserfilamenten gebildet ist.
